# EUROPEAN PATENT APPLICATION

(11) **EP 4 819 055 A1**
(43) Date of publication of application: **07.10.2026**
(21) Application number: 26166354.6
(22) Date of filing: 20.03.2026
(51) Int. Cl.: G06T 13/00

(54) **3D HUMAN-OBJECT INTERACTION GENERATION USING NEURAL LANGUAGE MODELS**

(30) Priority: 31.03.2025 US 202519095108
(71) Applicant: FUJITSU LIMITED, Kawasaki-shi, Kanagawa 211-8588 (JP); Carnegie Mellon University, Pittsburgh, PA 15213 (US)
(72) Inventor: KAWAMURA, Ryosuke, Santa Clara, CA, 95054 (US); MILACSKI, Zoltán Ádám, Pittsburgh, PA, 15213 (US); NIINUMA, Koichiro, Santa Clara, CA, 95054 (US); JENI, Laszlo, Pittsburgh, PA, 15213 (US); De la TORRE, Fernando, Pittsburgh, 15213 (US)
(74) Representative: Hoffmann Eitle

(57) **Abstract**

A method for 3D human-object interaction generation using neural language models is disclosed. The method includes receiving an input comprising an interaction location and a text prompt. A text-to-image generation model is applied on the text prompt. Initial differential parameters for a 3D parametric model representing the person in an interaction image are determined and a plurality of 2D views of the 3D environment is extracted. A sequence of prompts is prepared based on the plurality of 2D views and a neural language model is applied to the sequence of prompts. Loss function is initialized based on a set of body parts and a set of locations. The initial differential parameters are iteratively updated based on the loss function to obtain final differential parameters. The 3D parametric model is rendered in the 3D environment based on the final differential parameters.

## Description

### FIELD

The embodiments discussed in the present disclosure are related to generation of 3D human-object interaction using neural language models (NLMs).

### BACKGROUND

With advancements in artificial intelligence (AI), numerous machine learning models have been developed for various applications. Recently, there has been a significant increase in the focus on generating 3D human-object interactions within specific environment scenes. This area is now central to mainstream text-to-image processing techniques.

The generation of 3D human-object interactions includes both common and rare interactions. Various techniques have been developed for this purpose. One such technique involves learning-based methods that rely on ground-truth data, such as 3D scenes and 3D motion data of human interactions. However, a major drawback of this approach is that it fails to generate a diverse set of human-scene interactions, especially the infrequent ones. Additionally, the high cost of data gathering limits the availability of data needed to learn and generate these rare interactions, thereby restricting the variety of actions and scenes that can be effectively modeled and reproduced.

Another technique generates a diverse set of human-scene interactions using a zero-shot synthesis method. This method uses natural language descriptions and coarse point locations to guide the inpainting process of stable diffusion, creating human figures in scene images based on the text. These human figures can then be converted into 3D human models. While existing text-to-image models can generate common interactions without relying on extensive datasets, such models may struggle to generate rare interactions due to dataset limitations. This limitation arises from the significant influence of input images and their contained objects on the inpainting process.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a system is provided. The system may include a memory and a processor. The memory may be configured to store a set of instructions. The processor may be coupled to the memory and execute the instructions to perform a set of operations. The processor may receive an input that comprises an interaction location in a three-dimensional (3D) environment and a text prompt describing an interaction of a person with an object. The processor may further generate an interaction image by application of a text-to-image generation model on the text prompt and may determine initial differential parameters for a 3D parametric model representing the person in the interaction image. The processor may extract a plurality of two-dimensional (2D) views of the 3D environment from a plurality of viewpoints around the interaction location and prepare a sequence of prompts based on the plurality of 2D views and the text prompt. The processor may further apply a neural language model (NLM) to the sequence of prompts to identify a set of body parts of the 3D parametric model that must contact a set of locations in the 3D environment to achieve the interaction. The processor may further initialize a loss function based on the set of body parts and the set of locations and may iteratively update the initial differential parameters based on the loss function to obtain final differential parameters of the 3D parametric model. The processor may finally render the 3D parametric model in the 3D environment based on the final differential parameters.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a block diagram representing an exemplary network environment for 3D human-object interaction generation using neural language models;
FIG. 2 is a block diagram that illustrates an exemplary system of FIG. 1 for 3D human-object interaction generation using neural language models;
FIG. 3 is a diagram that illustrates an exemplary execution pipeline for determination of initial differential parameters of a 3D parametric model;
FIG. 4 is a diagram that illustrates an exemplary execution pipeline for 3D human-object interaction generation using neural language models;
FIGs. 5A, 5B, 5C, 5D, and 5E are diagrams that collectively illustrate an exemplary scenario for human-object interaction generation and different body parts selection using neural language models; and
FIG. 6 is a diagram that illustrates a flowchart of an exemplary method for 3D human-object interaction generation using neural language models,
all according to at least one embodiment described in the present disclosure.

### DESCRIPTION OF EMBODIMENTS

Some embodiments described in the present disclosure may relate to methods and systems for human-object interaction generation and different body parts selection using neural language model. In the present disclosure, an input comprising an interaction location in a 3D environment and a text prompt describing an interaction of a person with an object may be received. A text-to-image generation model may be applied on the text prompt to generate an interaction image. Initial differential parameters may be determined for a 3D parametric model representing the person in the interaction image. A plurality of 2D views of the 3D environment may be extracted from a plurality of viewpoints around the interaction location. A sequence of prompts may be prepared based on the plurality of 2D views and the text prompt. A neural language model (NLM) may be applied to the sequence of prompts to identify a set of body parts of the 3D parametric model that must contact a set of locations in the 3D environment to achieve the interaction. A loss function may be initialized based on the set of body parts and the set of locations. The initial differential parameters may be iteratively updated based on the loss function to obtain final differential parameters of the 3D parametric model. The 3D parametric model may be rendered in the 3D environment based on the final differential parameters.

The technological field of text-to-3D generation may be improved by configuring a system to utilize the text-to-image generation model on the text prompts and the neural language model (NLM) to generate common human-scene interactions as well as uncommon human-scene interactions described in the text prompts. The system may synthesize a 3D human model that interacts with a 3D environment based on specific instructions. The system may synthesize a 3D parametric model by parametrizing posture and position. The system may further generate the interaction image using the text-to-image generation model on the text prompt to achieve the desired interaction. The system may further estimate 3D posture of the human in the interaction image. The interaction image may be a two-dimensional (2D) image generated from the text prompt. The system may utilize the NLM to specify contact parts of the human by analyzing the text prompt and the 3D environment. The system may further establish loss functions based on the specified contact parts and may optimize the initial differential parameters based on the loss functions to synthesize the 3D human-object interaction in the 3D environment. The system may utilize specific conditions for each human-scene interaction and custom loss function that accounts for variability in location and orientation.

The human-scene interaction may involve contact with the 3D environment, particularly contact of specific body parts with the object in the 3D environment. The contact of the specific body parts with the object may vary with each interaction. The system may further utilize the neural language model to effectively select relevant body parts and corresponding contact locations for distance calculations between the body parts and the object.

The disclosed approach may offer several advantages. Realistic 3D-human object interactions (both frequent and infrequent interactions) generation based on effective selection of one or more body parts that must contact the set of locations in the 3D environment, may be achieved by leveraging image analysis capabilities of vision language models (VLMs) and knowledge capabilities of large language models (LLMs), without requiring dependence on ground truth data and supervision. Due to very less or no dependence on the ground truth data, customized loss functions based on specific conditions may be optimized, thereby leading to generation of a diverse range of accurate static human-object interactions across different scenarios. Based on the utilization of the neural language models (such as VLMs and the LLMs), the common and even uncommon human-object interactions may be generated in a zero-shot manner.

Further, the proposed technique may involve leveraging of the customized loss functions for each human-object interaction using the neural language models, to generate specific conditions for each human-object interaction and refine the generated human-object interaction in terms of posture, location, and orientation. For refinement of the generated human-object interaction in terms of the posture, the location, and the orientation, a single dataset may be constructed based on dataset of generative artificial intelligence (AI) models. This dataset may include both the common interactions as defined in the generative AI models as well as the uncommon interactions not defined in the generative AI models. This allows for effective evaluation of a wide range of static human-object interactions using a single dataset.

The present disclosure provides a framework which may leverage the neural language models such as VLMs and LLMs, to synthesize accurate and realistic human-object interactions with natural postures that accurately reflect prompts in challenging situations. This approach may be optimized for efficiently generating diverse range of human postures based on the effective selection of different body parts of the human without requiring need of training data, to generate the uncommon interactions such as, for example, stamping a trash bag, hand standing on saddle of a standing cow, kicking a chair, hand standing on the chair, and the like. Additionally, this approach may be used across diverse applications such as augmented reality (AR), virtual reality (VR), digital twin technologies, computer games, and data augmentation applications.

Embodiments of the present disclosure are explained with reference to the accompanying drawings.

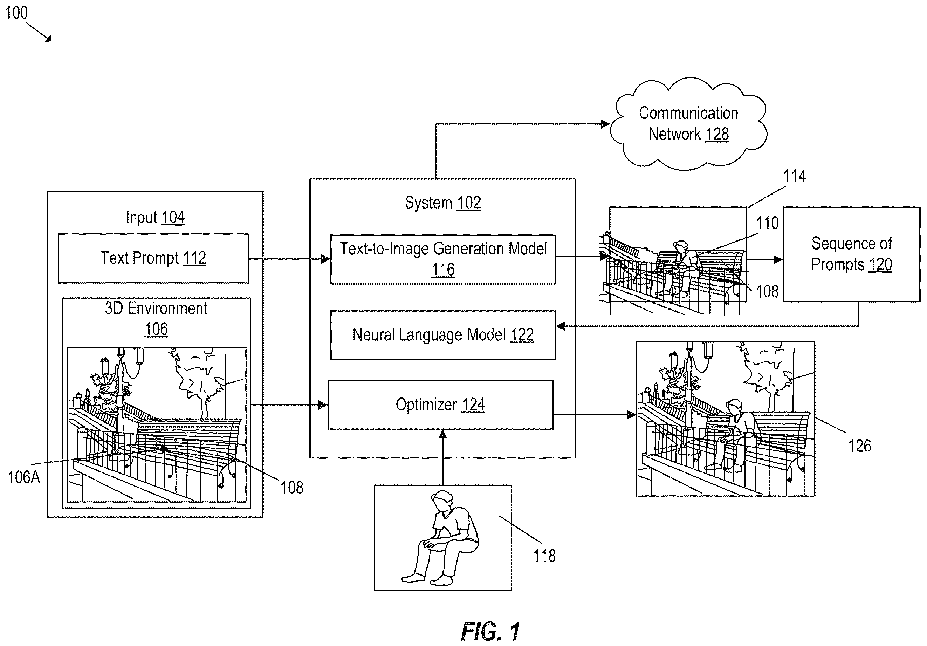

FIG. 1 is a diagram representing an example network environment related to 3D human-object interaction generation using neural language models, arranged in accordance with at least one embodiment described in the present disclosure. With reference to FIG. 1, there is shown a network environment 100. The network environment 100 may include a system 102, a text-to-image generation model 116, a neural language model 122, and an optimizer 124. A database (not shown) may be provided to store information such as an input 104 comprising an interaction location 106A in a 3D environment 106 and a text prompt 112 describing an interaction of a person 110 with an object 108. In FIG. 1, there is further shown an interaction image 114, a 3D parametric model 118, a sequence of prompts 120, and a render 126 associated with the interaction of the person 110 with the object 108. The system 102 may communicate with one or more networks (such as a communication network 128).

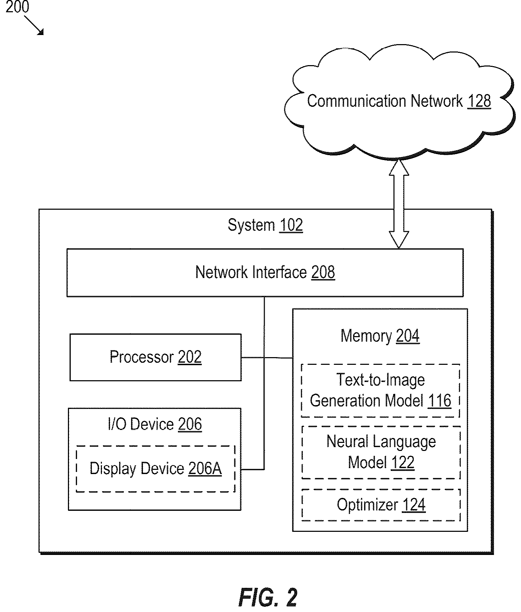

The system 102 may include suitable logic, circuitry, interfaces and/or code that may be configured to receive the input 104 required for interaction between the person 110 and the object 108. In an embodiment, the system 102 may control a display device (e.g., a display device 206A of FIG. 2). The display device 206A may be communicatively coupled to the system 102 or may be a standalone device configured to render the input 104 including the interaction location 106A and the text prompt 112. The text prompt 112 may describe the interaction of the person 110 with the object 108. Examples of the system 102 may include, but not limited to, a computing device, a smartphone, a mainframe machine, a server, a consumer electronic (CE) device, a computer workstation, and/or a device with a graph-processing capability (such as, a device with a set of graphic processor units (GPU)).

As used herein, the term "input 104" may be data received by the system 102 that comprises the interaction location 106A in the 3D environment 106 and the text prompt 112 describing the interaction of the person 110 with the object 108. The input 104 may also include a 3D mesh, a point cloud, or a render of the 3D environment 106 specifying 3D coordinates of the interaction location 106A.

As used herein, the term "text prompt 112" may be a natural language text describing a task to be performed by the text-to-image generation model 116. The natural language text may be in the form of a structured instruction that may be interpreted and understood by the text-to-image generation model 116. The task may be related to interaction of a person (such as the person 110) with one or more objects (such as the object 108). For example, a typical prompt may be a description of a desired output such as, "a person falling on stairs", "a standing person stamping a trash bag", or "a person sitting on a saddle of a standing cow".

The text-to-image generation model 116 may be a machine learning model to analyze the text prompt 112 and generate the interaction image 114 based on the analysis of the text prompt 112. The text-to-image generation model 116 may be trained on a large dataset of text-image pairs to interpret human language or other types of complex data. In certain instances, the dataset may be particular to human interactions with various type of objects.

In an embodiment, the text-to-image generation model 116 may be a type of artificial intelligence system (also referred to as an artificial deep neural network) configured to process and understand multiple types of data modalities such as text, images, audio, 3D data, and video, simultaneously. For instance, the text-to-image generation model 116 may extend the capabilities of traditional large language models (LLMs) by integrating various forms of data, enabling a more comprehensive understanding and generation of information across different media types.

In some embodiments, the text-to-image generation model 116 may be a large language model, such as a transformer-based decoder-only model, an encoder-decoder model (that uses transformers), or a model that uses neural networks other than transformers. In one or more embodiments, the text-to-image generation model 116 may include multiple encoders specialized for processing different modalities of data (such as image and text). The text-to-image generation model 116 may include a Fusion mechanism to integrate the outputs from various encoders. Techniques like cross-attention mechanism or multimodal transformers may be used to combine the different data types (such as text and image of the text prompt 112) into a unified representation. In some embodiments, the text-to-image generation model 116 may include decoders to generate outputs in various modalities. For example, a text decoder generates textual responses, while an image decoder may create visual content. During training, the text-to-image generation model 116 may use large-scale datasets that include paired data from multiple modalities (e.g., interaction images, interaction-based image-caption pairs, video with subtitles showing human-object interactions). The training may involve techniques like supervised learning, reinforcement learning with human feedback (RLHF), and fine-tuning to ensure that the text-to-image generation model 116 performs well across different tasks. For applications like image generation from text or text understanding, the text-to-image generation model 116 may include specialized heads that may be fine-tuned for specific tasks.

In some other embodiments, the text-to-image generation model 116 may use a diffusion process, which may start with a random noise image and iteratively the image to create a detailed image based on a text description. The architecture may include a text encoder (like transformers) to convert the text into a meaningful representation, a noise generator to create an initial noisy image, and a diffusion process that uses a denoising network (often a U-Net with attention mechanisms) to gradually reduce noise and add details. Finally, an image decoder (typically a CNN) may convert the refined latent representation into the detailed image. This guided, step-by-step transformation may ensure the generated image aligns closely with the input text, producing high-quality, contextually accurate results.

In these or other embodiments, the text-to-image generation model 116 may include electronic data, which may be implemented as, for example, a software component of an application executable on the system 102. The text-to-image generation model 116 may rely on libraries, external scripts, or other logic/instructions for execution by a processing device. The text-to-image generation model 116 may include code and routines configured to enable a computing device, such as an electronic device to perform one or more operations such as the generation of the interaction image 114, based on the application of the text-to-image generation model 116 on the text prompt 112. Additionally, or alternatively, the text-to-image generation model 116 may be implemented using hardware including a processor, a microprocessor (e.g., to perform or control performance of one or more operations), a field-programmable gate array (FPGA), or an application-specific integrated circuit (ASIC). Alternatively, in some embodiments, the text-to-image generation model 116 may be implemented using a combination of hardware and software.

As used herein, the term "3D parametric model 118" may refer to a computational model used to represent human bodies with high realism. The model may use parameters to adjust body shape and pose, include detailed anatomy of the face, hands, and body, and deform smoothly with movement. As an example, the 3D parametric model 118 may be an SMPL-X (Skinned Multi-Person Linear Model - extended) or a variant thereof.

In an example embodiment, the 3D parametric model 118 may represent the person 110 in the interaction image 114. For generation of 3D human-object interaction, the 3D parametric model 118 may include a set of body parts that must contact a set of locations in the 3D environment 106 to achieve a desired interaction (specified in the text prompt 112).

As used herein, the term "sequence of prompts 120" may be natural language text prepared based on the plurality of 2D views and the text prompt 112. Each natural language text may be in the form of a structured instruction that may be interpreted and understood by the neural language model 122. For example, a sequence of typical prompts may be descriptions of a desired output. The sequence of prompts 120 may be fed into the neural language model 122 for identification of a set of body parts of the 3D parametric model 118 that must contact a set of locations in the 3D environment 106 to achieve the interaction between the object 108 and the person 110.

The neural language model 122 may be a machine learning model configured to analyze each of the prompts from the sequence of prompts 120 to output a structured response, which may be used to identify a set of body parts of the 3D parametric model 118 that must contact a set of locations in the 3D environment to achieve an interaction between the object 108 and the person 110 (specified in the text prompt 112). For example, each prompt in the set of prompts 120 may include a statement including an instruction to identify at least one body part of the 3D parametric model 118. The neural language model 122 may generate a list with at least one body part of the 3D parametric model 118 that must contact at least one location in the 3D environment. The neural language model 122 may be trained or finetuned on a large dataset of question-answer pairs to interpret the human language or other types of complex data. In certain instances, the dataset may be particular to human-object interactions in different 3D environments.

The neural language model 122 may be a type of an artificial intelligence system (also referred to as an artificial deep neural network) configured to process and understand different types of data modalities, such as but not limited to, text, images, audio, 3D data, 2D images, or video from prompts. The neural language model 122 may extend the capabilities of traditional large language models (LLMs) by integrating various forms of data, enabling a more comprehensive understanding and generation of information across different media types. The neural language model 122 may be also referred to as a multimodal language model (MLM) or a Vision Language Model (VLM).

In some embodiments, the neural language model 122 may be a large language model, such as a transformer-based decoder-only model, an encoder-decoder model (that uses transformers), or a model that uses neural networks other than transformers. In one or more embodiments, the neural language model 122 may include multiple encoders specialized for processing different modalities of data (such as image and text). The neural language model 122 may include a Fusion mechanism to integrate the outputs from various encoders.

As an artificial deep neural network, the neural language model 122 may be referred to as a computational network or a system of artificial neurons in a neural network, arranged in a plurality of layers, as nodes. The plurality of layers of the neural network may include an input layer, one or more hidden layers, and an output layer. Each layer of the plurality of layers may include one or more nodes (or artificial neurons). Outputs of all nodes in the input layer may be coupled to at least one node of hidden layer(s). Similarly, inputs of each hidden layer may be coupled to outputs of at least one node in other layers of the neural network. Outputs of each hidden layer may be coupled to inputs of at least one node in other layers of the neural network. Node(s) in the final layer may receive inputs from at least one hidden layer to output a result. The number of layers and the number of nodes in each layer may be determined from hyper-parameters of the neural network. Such hyper-parameters may be set before or after training the neural network on a training dataset.

Each node of the neural language model 122 may correspond to a mathematical function (e.g., a sigmoid function or a rectified linear unit) with a set of parameters, tunable during training of the network. The set of parameters may include, for example, a weight parameter, a regularization parameter, and the like. Each node may use the mathematical function to compute an output based on one or more inputs from nodes in other layer(s) (e.g., previous layer(s)) of the neural network. All or some of the nodes of the neural network may correspond to the same or a different mathematical function.

In training of the neural language model 122, one or more parameters of each node of the neural network may be updated based on whether an output of the final layer for a given input (from the training dataset) matches a correct result based on a loss function for the neural network. The above process may be repeated for the same or a different input until a minima of loss function is achieved, and a training error is minimized. Several methods for training are known in art, for example, gradient descent, stochastic gradient descent, batch gradient descent, gradient boost, meta-heuristics, and the like.

The optimizer 124 may be a computer program, specialized circuitry, or a combination thereof to optimize differential parameters of the 3D parametric model 118 so as to fit a set of body parts of the 3D parametric model 118 to the set of locations. The optimizer 124 may be configured to iteratively update initial differential parameters of the 3D parametric model 118 based on the optimization of a loss function to obtain the final differential parameters of the 3D parametric model 118.

The communication network 128 may include various communication media through which the system 102 may communicate with other electronic devices such as servers (not shown). Examples of the communication network 128 may include, but are not limited to, the Internet, a cloud network, a Wireless Fidelity (Wi-Fi) network, a Personal Area Network (PAN), a Local Area Network (LAN), a cellular network (such as, a Long-term evolution (or 4G) cellular network or a 5G cellular network), a satellite network (such as, a network of low earth orbit satellites), and/or a Metropolitan Area Network (MAN)). Various devices in the example network environment 100 may be configured to connect to the communication network 128, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

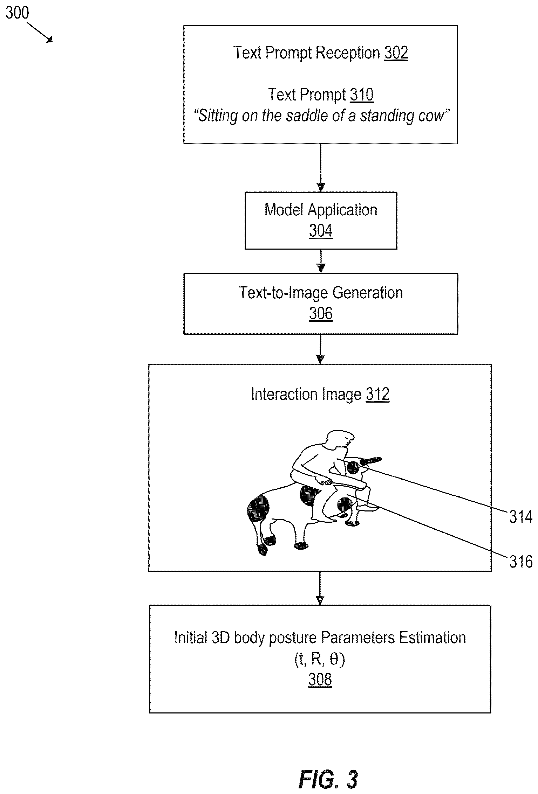

In operation, the system 102 may be configured to receive the input 104 comprising the interaction location 106A in the 3D environment and the text prompt 112 describing an interaction of a person (such as the person 110) with one or more objects (such as the object 108). For example, the text prompt 112 may be an instruction such as "kicking a car". In some instances, the text prompt 112 may be prefixed with "a person" and suffixed with ", full body" to obtain the instruction as "a person kicking a car, full body". This may be done to ensure that a full body of the person is depicted in the interaction image 114. The reception of the input comprising the interaction location 106A and the text prompt 112 is described further in, for example, FIG. 3, FIG. 4, and FIGs. 5A-5E.

The system 102 may be further configured to generate the interaction image 114 by application of the text-to-image generation model 116 on the text prompt 112. The interaction image 114 may be generated by interpreting the text prompt 112 and producing a corresponding visual representation. For example, the interaction image 114 generated from a text describing a person's interaction with objects would visually depict the person 110 engaging with the specified objects in the described manner. If the text prompt 112 says, "a person sitting on a bench in a park, full body", the interaction image 114 would show the person 110 sitting on the bench in a park. It should be noted that objects in the generated interaction image 114 may differ from objects in the 3D environment 106 in appearance or position. The accuracy in appearance or position may depend on extent by which details of the 3D environment are incorporated in the text prompt 112. The generation of the interaction image 114 is described further, for example, in FIG. 3.

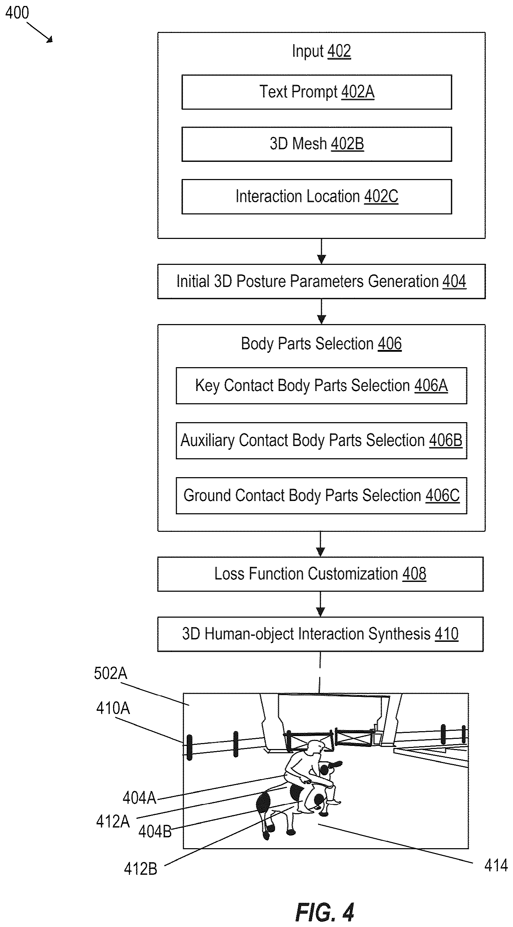

The system 102 may be further configured to determine initial differential parameters for the 3D parametric model 118 representing the person 110 in the interaction image 114. The initial differential parameters may include orientation parameters, position parameters, and posture parameter for the 3D parametric model 118. The determination of the initial differential parameters for the 3D parametric model 118 is described further, for example, in FIG. 3 and FIG. 4.

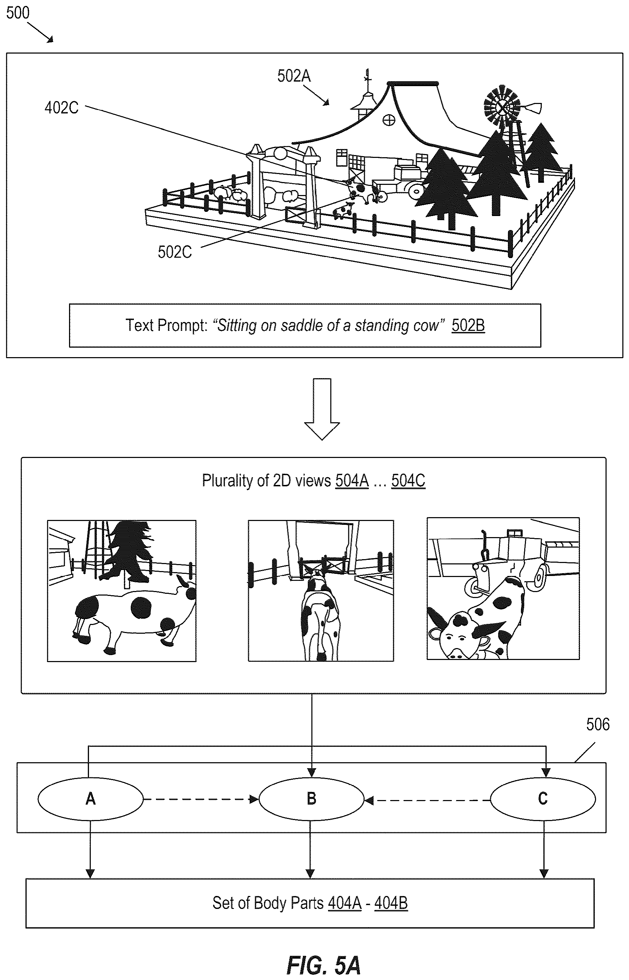

The system 102 may be further configured to extract a plurality of 2D views of the 3D environment 106 from a plurality of viewpoints around the interaction location 106A. The extraction of the 2D views of the 3D environment 106 is described further, for example, in FIG. 5A.

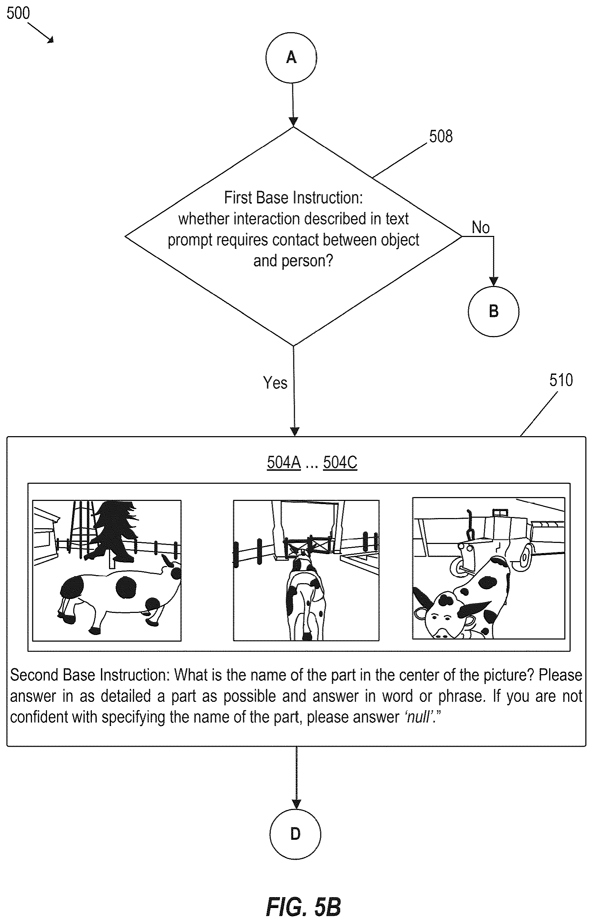

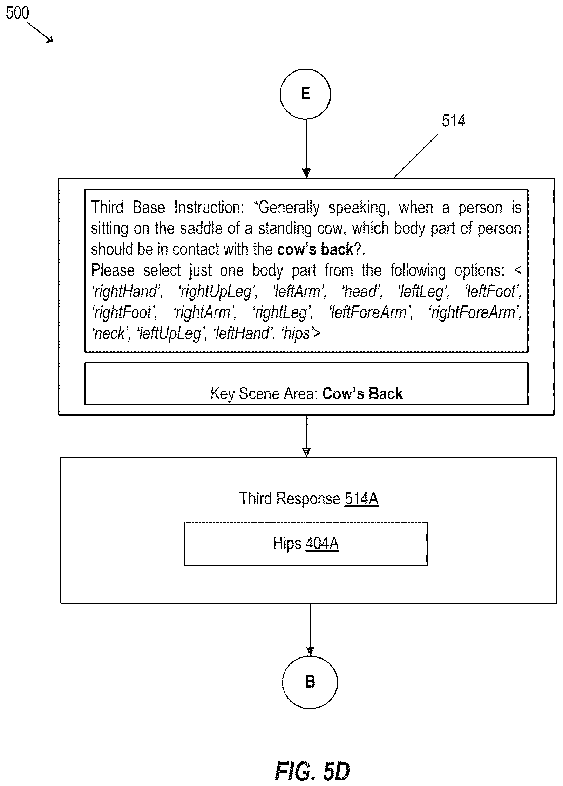

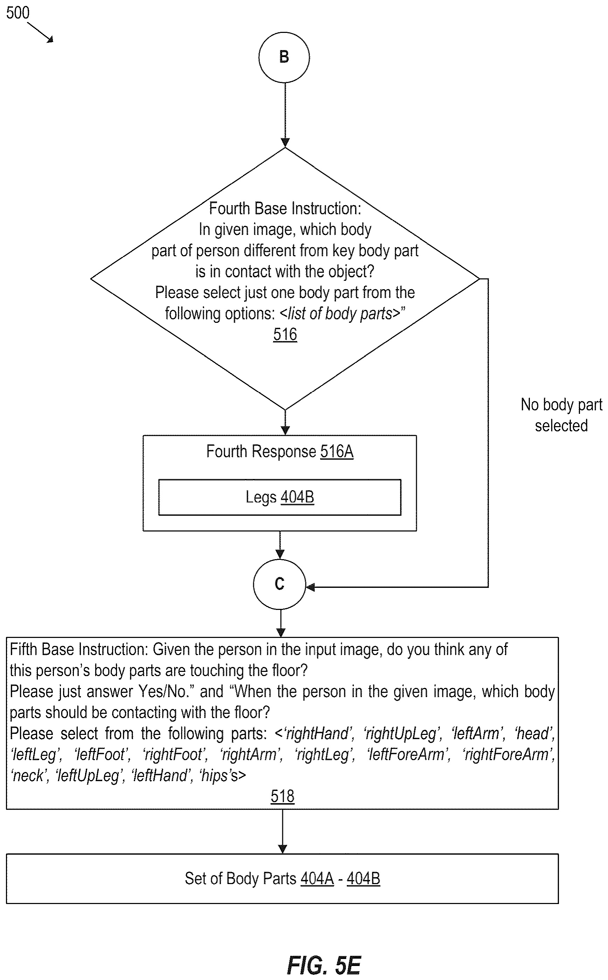

The system 102 may be configured to prepare the sequence of prompts 120 based on the plurality of 2D views and the text prompt 112. The sequence of prompts 120 may be natural language instructions in which each natural language instruction describes a task to be performed by the neural language model 122. For instance, the sequence of prompts 120 may be processed by the neural language model 122 to determine specific interactions in the 3D environment 106. Initially, a first prompt may be prepared, including a base instruction with a text prompt describing the interaction. The neural language model 122 may process this prompt to output a response indicating whether the interaction requires contact between the object 108 and the person 110. Following this, a second prompt may be prepared, which includes the plurality of 2D views, and a second base instruction associated with these views. Based on the second prompt, the neural language model 122 may output a second response specifying the name of a key scene area depicted in the 2D views. Thereafter, a third prompt may be prepared, incorporating a third base instruction and the second response specifying the key scene area. The neural language model 122 may process this third prompt to output a third response identifying a key body part that must contact a key contact location in the key scene area to achieve the interaction described in the text prompt 112. Subsequently, a fourth prompt may be prepared, including the interaction image 114, a fourth base instruction with the text prompt 112, and a list of body parts. The neural language model 122 may process this fourth prompt to output a fourth response specifying at least one body part from the list that is different from the key body part and must contact the object 108 in the interaction image 114 to achieve the interaction. Finally, a fifth prompt may be prepared, which includes the interaction image 114, the text prompt 112, a fifth base instruction associated with the interaction image 114 and text prompt 112, and a list of body parts. The neural language model 122 may process this fifth prompt to output a fifth response specifying a body part that must contact a ground surface in the interaction image 114 to achieve the interaction. The preparation of the sequence of prompts 120 based on the plurality of 2D views and the text prompt 112 is described further, for example, in FIG. 5B, FIG. 5D, and FIG. 5E.

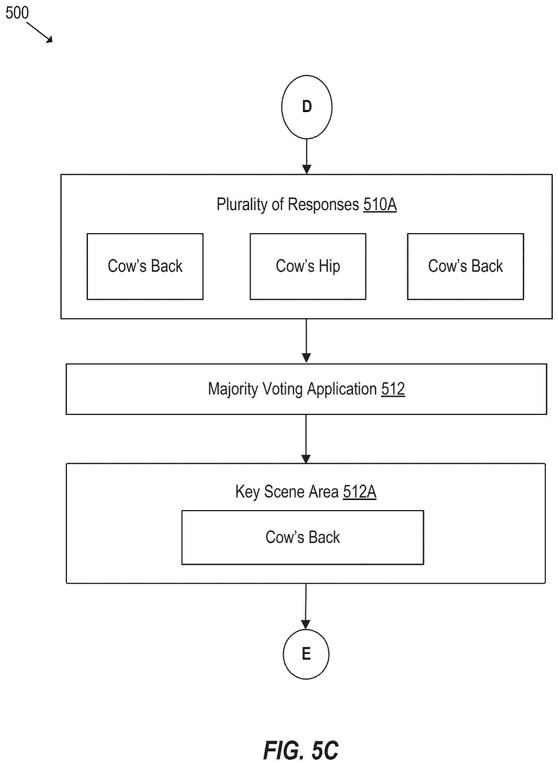

In an embodiment, the system 102 may be configured to apply the neural language model 122 to the sequence of prompts 120 to identify a set of body parts of the 3D parametric model 118 that must contact a set of locations in the 3D environment 106 to achieve the interaction described in the text prompt 112. In an embodiment, the neural language model 122 may be applied to a prompt to output a response specifying whether the interaction described in the text prompt 112 requires a contact between the object 108 and the person 110. For example, with reference to FIG. 1, the text prompt 112 may be prepared to include the instruction: "Sit on a chair". The neural language model 122 may then be applied to the text prompt 112 to output a response specifying whether the interaction described in the text prompt requires the contact between the chair and the person 110. For example, the response may specify the contact required between the chair and the person 110. The person 110 may be sitting on the chair with hips and upper legs as the body parts in contact with the chair. The application of the neural language model 122 on the sequence of prompts is described further, for example, in FIGs. 5C-5E.

The system 102 may be further configured to initialize a loss function based on the set of body parts and the set of locations. The loss function may include, but not limited to, a composite distance between vertices of the set of body parts and vertices of the set of locations, a penetration loss specifying a signed distance between a body vertex of the 3D parametric model 118 and a scene vertex of the 3D environment, and a regularization loss measuring the deviation in the pose parameter of the 3D parametric model 118 with respect to the initialized pose parameter of the initial differential parameters. The initialization of the loss function based on the set of body parts and the set of locations is described further, for example, in FIG. 3 and FIG. 4.

The system 102 may be configured to use the optimizer 124 to iteratively update the initial differential parameters based on the loss function to obtain the final differential parameters of the 3D parametric model 118. The initial differential parameters may be updated iteratively to minimize the value of the loss function until the value of the loss function satisfies a convergence condition. The iterative update of the initial differential parameters is described further, for example, in FIG. 4, and FIG. 5C.

The system 102 may be configured to render the 3D parametric model 118 in the 3D environment 106 based on the final differential parameters. The 3D parametric model may be a model that may represent the person 110 in the interaction image 114. Further, the 3D parametric model 118 may be rendered to represent the interaction illustrated in the interaction image 114 and described in the text prompt 112, with a set of body parts contacting a set of locations in the 3D environment 106 to achieve the interaction. The rendering of the 3D parametric model 118 in the 3D environment based on the final differential parameters is described further, for example, in FIG. 4, FIG. 5A, FIG. 5D, and FIG. 5E.

Modifications, additions, or omissions may be made to FIG. 1 without departing from the scope of the present disclosure. For example, the network environment 100 may include more or fewer elements than those illustrated and described in the present disclosure. For instance, in some embodiments, the network environment 100 may include the system 102 but not the optimizer 124. In addition, in some embodiments, the functionality of the optimizer 124 may be incorporated into the system 102, without a deviation from the scope of the disclosure.

FIG. 2 is a block diagram that illustrates an exemplary system of FIG. 1 for the 3D human-object interaction generation using the neural language models, arranged in accordance with at least one embodiment described in the present disclosure. FIG. 2 is explained in conjunction with elements from FIG. 1. With reference to FIG. 2, there is shown a block diagram 200 of the system 102. The system 102 may include a processor 202, a memory 204, the text-to-image generation model 116, the neural language model 122, the optimizer 124, an input/output (I/O) device 206, and a network interface 208. The I/O device 206 may include a display device 206A. The memory 204 may include a large dataset (for e.g. the question-answer pairs to interpret the human language or the other types of complex data).

The processor 202 may include suitable logic, circuitry, interfaces, and/or code that may be configured to execute program instructions associated with different operations to be executed by the system 102. The operations may include, but are not limited to, input reception, interaction image generation, initial differential parameters determination, plurality of 2D views extraction, sequence of prompts preparation, neural language model application, loss function initialization, initial differential parameters iterative update, and 3D parametric model rendering. The processor 202 may include any suitable special-purpose or general-purpose computer, computing entity, or processing device, including various computer hardware or software modules, and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 2, the processor 202 may include any number of processors configured to, individually or collectively, perform or direct performance of any number of operations of the system 102, as described in the present disclosure. Additionally, one or more of the processors may be present on one or more systems, such as different servers.

In some embodiments, the processor 202 may be configured to interpret and/or execute program instructions and/or process data stored in the memory 204. In some other embodiments, the processor 202 may fetch program instructions associated with the text-to-image generation model 116 and the neural language model 122 and may load the program instructions in the memory 204. After the program instructions are loaded into memory 204, the processor 202 may execute the program instructions. Some of the examples of the processor 202 may be a Graphical Processing Unit (GPU), a Central Processing Unit (CPU), a Reduced Instruction Set Computer (RISC) processor, an Application-Specific Integrated Circuit (ASIC) processor, a Complex Instruction Set Computer (CISC) processor, a coprocessor, and/or a combination thereof.

The memory 204 may include suitable logic, circuitry, interfaces, and/or code that may be configured to store program instructions executable by the processor 202. In certain embodiments, the memory 204 may be configured to store information, such as, but not limited to, the interaction location 106A in the 3D environment 106, the text prompt 112, the interaction image 114, the 3D parametric model 118, the initial differential parameters of the 3D parametric model 118, the final differential parameters of the 3D parametric model 118, the plurality of 2D views, the plurality of viewpoints, the sequence of prompts 120, and the set of locations. The memory 204 may further store a set of values associated with the initialized loss function. The loss function may include, but not limited to, the composite distance between the vertices of the set of body parts and the vertices of the set of locations, the penetration loss specifying the signed distance between the body vertex of the 3D parametric model 118 and the scene vertex of the 3D environment, and the regularization loss measuring the deviation in the pose parameter of the 3D parametric model 118 with respect to the initialized pose parameter of the initial differential parameters.

The memory 204 may include computer-readable storage media for carrying or having computer-executable instructions or data structures stored thereon. Such computer-readable storage media may include any available media that may be accessed by a general-purpose or special-purpose computer, such as the processor 202. By way of example, and not limitation, such computer-readable storage media may include tangible or non-transitory computer-readable storage media, including but not limited to, a CPU cache, a Hard Disk Drive (HDD), a Solid-State Drive (SSD), Random Access Memory (RAM), Read-Only Memory (ROM), Electrically Erasable Programmable Read-Only Memory (EEPROM), Compact Disc Read-Only Memory (CD-ROM), a Secure Digital (SD) card, or other optical disk storage, magnetic disk storage or other magnetic storage devices, or flash memory devices (e.g., solid state memory devices). The computer-readable storage may also include any other storage medium which may be used to carry or store particular program code in the form of computer-executable instructions or data structures, and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The I/O device 206 may include suitable logic, circuitry, interfaces, and/or code that may be configured to receive the large dataset of the input 104 comprising question-answer pairs to interpret human language or other types of complex data. For example, the input 104 may comprise the interaction location 106A in the 3D environment and the text prompt 112 describing the interaction of the person 110 with the object 108. The I/O device 206 may be further configured to provide an output in response to the input 104. For example, the output may correspond to the generated interaction image 114 representing the person 110 in contact with the object 108. The I/O device 206 may include various input and output devices, which may be configured to communicate with the processor 202 and other components, such as the network interface 208. Examples of the input devices may include, but are not limited to, a touch screen, a keyboard, a mouse, a joystick, and/or a microphone. Examples of the output devices may include, but are not limited to, the display device 206A and a speaker. The I/O device 206 may be within the system 102 or outside of the system 102.

The display device 206A may include logic, circuitry, and interfaces configured to display the interaction location 106A in the 3D environment, the text prompt 112, the interaction image 114, the 3D parametric model 118, the plurality of 2D views, the plurality of viewpoints, the sequence of prompts 120, the identified set of body parts of the 3D parametric model 118, and the set of locations. The display device 206A may be a touch screen which may enable a user to provide user-inputs via the display device 206A. The touch screen may be at least one of a resistive touch screen, a capacitive touch screen, or a thermal touch screen. The display device 206A may be realized through several known technologies such as, but not limited to, a Liquid Crystal Display (LCD) display, a Light Emitting Diode (LED) display, a plasma display, or an Organic LED (OLED) display technology, or other display devices. In accordance with an embodiment, the display device 206A may refer to a display screen of a head mounted device (HMD), a smart-glass device, a see-through display, a projection-based display, an electro-chromic display, or a transparent display.

The network interface 208 may include suitable logic, circuitry, and interfaces that may be configured to facilitate communication between the processor 202 (i.e., the system 102) and the server (not shown), via the communication network 128. The network interface 208 may be implemented by use of various known technologies to support wired or wireless communication of the system 102 with the communication network 128. The network interface 208 may include, but is not limited to, antenna, a radio frequency (RF) transceiver, one or more amplifiers, a tuner, one or more oscillators, a digital signal processor, a coder-decoder (CODEC) chipset, a subscriber identity module (SIM) card, or a local buffer circuitry.

The network interface 208 may be configured to communicate via wireless communication with networks, such as the Internet, an Intranet, or a wireless network, such as a cellular telephone network, a wireless local area network (LAN), and a metropolitan area network (MAN). The wireless communication may be configured to use one or more of a plurality of communication standards, protocols and technologies, such as Enhanced Data GSM Environment (EDGE), wideband code division multiple access (W-CDMA), Long Term Evolution (LTE), 5^{th} Generation (5G) New Radio (NR), Global System for Mobile Communications (GSM), code division multiple access (CDMA), time division multiple access (TDMA), Bluetooth, Wireless Fidelity (Wi-Fi) (such as IEEE 802.11a, IEEE 802.11b, IEEE 802.11g or IEEE 802.11n), voice over Internet Protocol (VoIP), light fidelity (Li-Fi), Worldwide Interoperability for Microwave Access (Wi-MAX), a protocol for email, instant messaging, and a Short Message Service (SMS).

In certain embodiments, the system 102 may be divided into a front-end subsystem and a backend subsystem. The front-end subsystem may be solely configured to receive requests/instructions from a user device, one or more of third-party servers, web servers, client machine, and the backend subsystem. These requests may be communicated back to the backend subsystem, which may be configured to act upon these requests. For example, in case the system 102 is in communication with multiple servers, few of the servers may be front-end servers configured to relay the requests/instructions to remaining servers associated with the backend subsystem.

Modifications, additions, or omissions may be made to the example system 102 without departing from the scope of the present disclosure. For example, in some embodiments, the example system 102 may include any number of other components that may not be explicitly illustrated or described for the sake of brevity.

FIG. 3 is a diagram that illustrates an exemplary execution pipeline for determination of initial differential parameters of the 3D parametric model, in accordance with an embodiment of the disclosure. FIG. 3 is described in conjunction with elements from FIG. 1 and FIG. 2. With reference to FIG. 3, there is shown an exemplary execution pipeline 300. The execution pipeline 300 may include a sequence of operations that may be executed by the processor 202 of the system 102 of FIG. 1 for the determination of the initial differential parameters of the 3D parametric model (e.g., a 3D mesh 402B of FIG. 4).

The execution pipeline 300 includes operation 302 for text prompt reception, operation 304 for application of the text-to-image generation model 116 on a text prompt 310, operation 306 for interaction image generation, and operation 308 for initial 3D body posture parameters estimation. Though only one text prompt 310 is shown in FIG. 3, the scope of the disclosure may not be so limited. There may be more than one text prompt on which the text-to-image generation model 116 is applied, without a departure from the scope of the disclosure.

At 302, an operation for reception of the text prompt 310 may be executed. The processor 202 may be configured to receive the text prompt 310. In one or more embodiments, the processor 202 may be configured to receive the input 104 that includes an interaction location 402C in a 3D environment 502A (as shown in FIG. 5A) and the text prompt 310 describing the interaction of a person 314 with an object 316. The interaction location 402C may refer to a specified location where the interaction occurs between the object 316 and the person 314 (to be rendered in 3D via the 3D parametric model (e.g., the 3D mesh 402B). Further, the interaction location 402C may be a coarse point location of the desired interaction in the 3D environment 502A and is manually specified. For example, the interaction location 402C may be a key contact location 412A, an auxiliary contact location 412B, or a ground contact location (not shown) in the 3D environment 502A. The key contact location 412A, the auxiliary contact location 412B, and the ground contact location are further described in detail, in FIG. 5D and FIG. 5E.

The operation for reception of the text prompt 310 is crucial for generation of an initial posture for the 3D parametric model (e.g., 3D mesh 402B). For example, the text prompt 310 may include an instruction as "Sitting on the saddle of a standing cow". This text prompt 310 may be fed into the text-to-image generation model 116 to generate an interaction image 312. The reception of the text prompt 310 including the description of the interaction of the person 314 with the object 316 is described further, for example, in FIG. 5A.

At 304, application of the text-to-image generation model 116 on the text prompt 310 may be performed. The processor 202 may be configured to apply the text-to-image generation model 116 on the text prompt 310. The text-to-image generation model 116 may correspond to at least one of multimodal large language model (MLLM), vision language model (VLM), a Generative Adversarial Network (GAN), or a diffusion model. The application of the text-to-image generation model 116 on the text prompt 310 is described further, for example, in FIG. 5A.

At 306, operation for interaction image generation may be executed. In an embodiment, the processor 202 may be configured to generate the interaction image 312 based on the application of the text-to-image generation model 116 on the text prompt 310. In at least one embodiment, the processor 202 may be further configured to utilize the text-to-image generation model 116 to generate a set of interaction images based on the text prompt 310 or a set of text prompts (i.e., variations generated from the text prompt 310), thereby allowing generation of a diverse range of interactions matching the description of the text prompt 310. The generated interaction image 312 may be used to estimate a 3D posture of the person 314 in the interaction image 312. The generation of the interaction image 312 is described further, for example, in FIG. 5B and FIG. 5E.

At 308, operation for estimation of initial differential parameters may be executed. The processor 202 may be configured to estimate the initial differential parameters of the person 314 in the interaction image 312. The initial differential parameters may represent the 3D posture of the person 314 in the interaction image 312. For example, the initial differential parameters may include orientation parameter, position parameter, and posture parameter, represented by "R", "t", and "θ", respectively. Vertices associated with the 3D body posture of the person 314 may be represented by "Ṽ". In an instance, orientation, position, and posture parameters may be optimized using a loss function to obtain final differential parameters, which may be used to render the 3D parametric model (e.g., the 3D mesh 402B) in the 3D environment 502A. The estimation of the initial 3D body posture parameters is further described further, for example, in FIG. 4 and FIG. 5.

FIG. 4 is a diagram that illustrates an exemplary execution pipeline for 3D human-object interaction generation using neural language models, in accordance with an embodiment of the disclosure. FIG. 4 is described in conjunction with elements from FIG. 1, FIG. 2, and FIG. 3. With reference to FIG. 4, there is shown an exemplary processing pipeline 400 for the 3D human-object interaction generation using the knowledge capabilities of the neural language model 122. The processing pipeline 400 may include an input 402 having a text prompt 402A, a 3D mesh 402B, an interaction location 402C in the 3D environment 502A (shown in FIG. 5), and a set of operations including an operation for initial 3D posture parameters generation 404, an operation for body parts selection 406, an operation for loss function customization 408, and an operation for 3D human-object interaction synthesis 410.

The text prompt 402A may describe the interaction of the person 314 with the object 316 in the 3D environment 502A. For example, the text prompt 402A may be an instruction prepared to include description as, "Person sitting on saddle of a standing cow". The 3D mesh 402B may be a representation of a 3D parametric model comprising reference points in X, Y, and Z axes to define shapes with height, width, and depth. Vertices associated with the 3D mesh 402B may be denoted by "V".

In one or more embodiments, the processor 202 may be configured to receive the input comprising the interaction location 402C, the text prompt 402A, and the 3D mesh 402B. In these or other embodiments, a database (not shown) may store a dataset with information such as the input 402 comprising the interaction location 402C and a plurality of text prompts (includes the text prompt 402A) describing the interaction of the person 314 with the object 316. For example, the database may store the plurality of text prompts with each prompt describing the interaction that requires a contact between the object 316 and the person 314 in a specific manner (e.g., sitting, hand standing, pushing, etc.).

The processor 202 may be configured to apply the text-to-image generation model 116 on the text prompt 402A to generate the interaction image 312.

At 404, operation for initial differential parameters generation may be executed. In one or more embodiments, the processor 202 may be configured to determine the initial differential parameters for the 3D mesh 402B (i.e., the 3D parametric model) that represents the person 314 in the interaction image 312. Techniques for determining the initial differential parameters from the interaction image 312 are well known to those skilled in the art; thus, additional details regarding the determination of the initial differential parameters have been omitted from the disclosure for the sake of brevity.

In some instances, the processor 202 may be configured to extract a plurality of 2D views 504A...504C (as shown in FIG. 5A) of the 3D environment 502A from a plurality of viewpoints around the interaction location 402C. The processor 202 may be further configured to prepare a sequence of prompts based on the plurality of 2D views 504A...504C and the text prompt 402A. The sequence of prompts may be a plurality of natural language instructions in which each natural language instruction describes a task to be performed by the neural language model 122. Further, the neural language model 122 may be applied on the sequence of prompts to identify a set of body parts 404A-404B of the 3D mesh 402B (i.e., the 3D parametric model) for selection. The set of body parts 404A-404B must contact a set of locations 412A-412B (as shown in FIG. 5A) in the 3D environment 502A to achieve the interaction described in the text prompt 402A.

At 406, operation for body parts selection may be executed. The processor 202 may be configured to select the set of body parts 404A-404B of the 3D mesh 402B (i.e., the 3D parametric model) contacting the set of locations 412A-412B in the 3D environment 502A. The operation of body parts selection may include at least one of key contact body parts selection 406A, auxiliary contact body parts selection 406B, and ground contact body parts selection 406C. The operation of body parts selection may be divided into the above three categories to specify necessary interaction conditions accurately and reduce errors caused by models such as, text-to-image generation and neural language models.

In a first embodiment, operation for key contact body parts selection 406A may be executed. The key contact body parts may be selected to calculate distance to a specific location in the 3D environment 502A. In an embodiment, the processor 202 may be configured to identify a key scene area from the 3D environment 502A by selecting the k-nearest neighbor vertices from the scene mesh of the 3D environment 502A. The k-nearest neighbor vertices may be selected based on the interaction location 402C. Further, the plurality of 2D views 504A...504C of the 3D environment 502A may be extracted to include the key scene area from the plurality of viewpoints. For example, the key scene area may be determined from a specified coarse point location "L" using an equation (1), which is defined as follows: ${V}_{k} = \left\{\left.v∈{V}_{s}\right|\left‖v-L\right‖2\leq d\left(k\right)\left(L\right)\right\}$ (1) where d(k)(L) represents the k-th smallest distance from the location (L) to points in Vₛ, and Vₛ denotes the vertices of the 3D environment 502A.
Operations associated with identification of the key scene area and body parts selection 406 are further described, for example, in FIGs. 5C and 5D.

In some instances, relying on the key contact body parts may lead to unnatural positions and orientations as segmentations of parts is not sufficiently detailed. To address this, the auxiliary contact body parts may be selected to calculate distance to the 3D environment 502A, ensuring a more natural appearance with respect to the human-object interactions. In a second embodiment, the operation for auxiliary contact body parts selection 406B may be executed. The processor 202 may be configured to identify an auxiliary contact location 412B from the set of locations 412A-412B and an auxiliary body part 404B from the set of body parts 404A-404B that must contact a 3D asset representing the object 316 in the 3D environment 502A. The auxiliary contact location 412B may be different from the key contact location 412A. Similarly, the auxiliary body part 404B may be different from a key body part 404A and must remain in contact with the 3D asset representing the object 316 in the 3D environment 502A to achieve the interaction described in the text prompt 310.

In some instances, to prevent human model from floating in certain interactions, the ground contact body parts may be selected to calculate distance to the ground. In a third embodiment, the operation for ground contact body parts selection 406C may be executed. The processor 202 may be configured to identify a ground contact location from the set of locations 412A-412B and a ground contact body part (not shown) from the set of body parts 404A-404B that must contact a ground surface in the 3D environment 502A to achieve the interaction. The ground contact location may be a location where the ground contact body part must contact a ground mesh representing the ground surface in the 3D environment 502A. For example, if the interaction requires the person 314 to push the object 316, the ground contact body part may be identified as the feet of the person 314.

At 408, the operation for loss function customization may be executed. The loss functions may be customized based on interaction requirements to ensure realistic and contextually accurate human-scene interactions. The processor 202 may be configured to initialize the loss function based on the set of body parts 404A-404B and the set of locations 412A-412B. The loss function may include, but not limited to, a composite distance between the vertices of the set of body parts 404A-404B and the vertices of the set of locations 412A-412B, a penetration loss specifying the signed distance between the body vertex of the 3D parametric model (e.g., 3D mesh 402B) and the scene vertex of the 3D environment 502A, and a regularization loss measuring the deviation in the pose parameter of the 3D parametric model (e.g., 3D mesh 402B) with respect to the initialized pose parameter of the initial differential parameters.

The processor 202 may be configured to iteratively update the initial differential parameters based on the loss function to obtain the final differential parameters of the 3D parametric model (e.g., the 3D mesh 402B). For example, the loss function may be minimized using iterative optimization technique to adjust orientation, position, and posture parameters, represented by "R", "t", and "θ". Further, the initial differential parameters may be updated iteratively while minimizing the value of the loss function, until the value of the loss function satisfies a convergence condition. For example, the initial differential parameters represented by "R", "t", and "θ" may be adjusted through a suitable iterative optimization technique to minimize the customized loss functions. This process may be repeated N times, and the final different parameters may be obtained as final output, to ensure generation of realistic and diverse human-scene interactions. In an instance, values of the initial differential parameters, "R", "t", and "θ", may be updated iteratively to minimize value of the loss functions, until the value of the loss function is below a loss threshold (e.g., 0.05).

At 410, operation for 3D human-object interaction synthesis may be executed. The processor 202 may render the 3D mesh 402B (i.e., the 3D parametric model) of the person 314 in the 3D environment 502A based on the final differential parameters. As shown, for example, a view 410A of the 3D environment 502A is rendered to include the 3D mesh 402B (i.e., a 3D parametric model) of the person 314 sitting on the saddle region of a cow (i.e., the 3D asset representing the object 316).

FIGs. 5A, 5B, 5C, 5D, and 5E are diagrams that collectively illustrate an exemplary scenario for human-object interaction generation and different body parts selection using neural language models, in accordance with an embodiment of the disclosure. FIGs. 5A, 5B, 5C, 5D, and 5E are explained in conjunction with elements from FIG. 1, FIG. 2, FIG. 3, and FIG. 4. With reference to FIGs. 5A-5E, there is shown an exemplary scenario 500. The exemplary scenario 500 depicts the 3D environment 502A comprising the interaction location 402C. A text prompt 502B is further shown describing an interaction of the person 314 with the object 316. For example, the text prompt 502B may include a natural language instruction such as "sitting on the saddle of a standing cow". This text prompt 502B may be fed to the text-to-image generation model 116 to generate the interaction image 312. Alternatively, the text prompt 502B may be modified as "person sitting on the saddle of a standing cow, full body" to ensure that the generated interaction image 312 includes a full body of the person 314. Based on the generated interaction image 312, the initial differential parameters for the 3D parametric model (e.g., 3D mesh 402B) representing the person 314 in the interaction image 312 may be determined.

In FIG. 5A, there is further shown a plurality of 2D views 504A...504C of the 3D environment 502A around the interaction location 402C. The plurality of 2D views 504A...504C may be obtained from different viewpoints (i.e., viewing angles) in the 3D environment 502A, with the object 316 such as a standing cow in the 3D environment 502A as the interaction location from different camera angles.

The plurality of 2D views 504A...504C, the interaction image 312, and the text prompt 502B may be used to prepare a sequence of prompts for body part selection 506. The neural language model 122 may be applied to the sequence of prompts to identify the set of body parts 404A-404B of the 3D mesh 402B (representing the 3D parametric model) that must contact the set of locations 412A-412B in the 3D environment 502A to achieve the interaction between the object 316 and the person 314. The set of body parts 404A-404B may include, but not limited to, a key body part 404A, an auxiliary body part 404B, and a ground contact body part (not shown).

For example, the neural language model 122 may be applied to the sequence of prompts to identify a key body part 404A that must contact the key contact location 412A of the set of locations 412A-412B in the key scene area of the 3D environment 502A. Further, the neural language model 122 may be applied to the sequence of prompts to identify the auxiliary body part 404B that contacts the 3D asset at the auxiliary contact location 412B. The 3D asset may represent the object 316 in the 3D environment 502A. Further, the neural language model 122 may be applied to the sequence of prompts to identify a ground contact body part that must contact the ground mesh. In case of the text prompt 502B, there may be no ground contact body part as the interaction requires the person 314 to sit on the saddle/back of the object 316. The ground mesh may represent the ground surface in the 3D environment 502A. The operations for selection of the key body part 404A are explained further in FIGs. 5B-5D, and the operations for selection of the auxiliary body part 404B, and the ground contact body part are explained further in FIG. 5E.

For key body part selection, the sequence of prompts may comprise a first prompt prepared to include a first base instruction with the text prompt 502B describing the interaction between the object 316 and the person 314. In one instance, the processor 202 may be configured to prepare the first prompt based on a preset prompt template. For example, the first prompt may be prepared to include a first base instruction as: "whether interaction described in text prompt requires contact between the object and the person?".

At 508, the processor 202 may be configured to apply the neural language model 122 to the first prompt to output a first response (e.g., a yes or a no). The first response may specify a response stating whether the interaction described in the text prompt 502B requires the contact between the object 316 and the person 314. In case the first response is a yes, the control may pass to 510. Otherwise, the control may pass to 516.

At 510, the processor 202 may further prepare a second prompt to include the plurality of 2D views 504A...504C and a second base instruction associated with the plurality of 2D views 504A...504C. For example, the second prompt may be prepared to include the second base instruction as: "What is the name of the part in the center of the picture? Please answer in as detailed a part as possible and answer in word or phrase. If you are not confident with specifying the name of the part, please answer null". The second prompt 504B may be prepared to determine a name of the key scene area or key contact location (such as the key contact location 512) where the interaction with the object 316 should occur. The processor 202 may be further configured to apply the neural language model 122 to the second prompt based on the first response to output a plurality of responses 510A corresponding to the plurality of 2D views 504A...504C. The plurality of responses 510A may reveal a body part of the object 316 at the center of each 2D view of the plurality of 2D views 504A...504C. For example, the plurality of responses 510A may include responses such as: "Cow's Back", "Cow's Hip", and "Cow's Back".

At 512, the processor 202 may be further configured to apply operation of majority voting on the plurality of responses 510A to output a second response. The second response may specify the name of the key scene area 512A depicted in the plurality of 2D views 504A...504C. The majority voting may be a strategy used to reduce errors in identifying name of the key scene area 512A. Multiview rendering technique may be used to generate multiple images centered on the interaction location 402C, and the neural language model 122 may be queried to determine the exact name of the key scene area 512A using the majority voting strategy. For example, the majority voting strategy may be used to determine the name of the key scene area 512A as "Cow's Back".

At 514, the processor 202 may be further configured to prepare a third prompt to include a third base instruction and the second response specifying the name of the key scene area 512A at a placeholder location in the third base instruction. For example, the third prompt may be prepared to include a third base instruction as: "Generally Speaking, when a person is sitting on the saddle of a standing cow, which body part of person should be in contact with the cow's back? Please select just one body part from the following options: <list of body parts>". The list is displayed as < 'rightHand', 'rightUpLeg', 'leftArm', 'head', 'leftLeg', 'leftFoot', 'rightFoot', 'rightArm', 'rightLeg', 'leftForeArm', 'rightForeArm', 'neck', 'leftUpLeg', 'leftHand', 'hips'>. The second response specifying the name of the key scene area 512A may be included along with the third base instruction to output a third response 514A. The third response 514A may specify the key body part 404A from the set of body parts 404A-404B that must contact the key contact location 412A of the set of locations 412A-412B in the key scene area 512A of the 3D environment 502A, to achieve the interaction described in the text prompt 502B. For example, the third response 514A may specify the key body part 404A of the person 314 as "Hips". In some instances, the key contact location 412A in the key scene area 512A of the 3D environment 502A may correspond to a body part of the 3D asset representing the object 316 in the 3D environment 502A. The key contact location 412A 524B may be same as the interaction location 402C or may include the interaction location 402C.

The vertices of the selected key body part 404A may be denoted as Vₖ. A distance loss function denoted by d_{key} may be calculated based on Vₖ. The d_{key} may be defined using mathematical equations (2) and (3) as follows: ${d}_{key} = \left\{{\sum }_{vk ∈ {V}^{˜} k} minvk ∈ {V}^{˜} k \left‖{υ}^{˜}k-vk\right‖ 2 , if {A}_{k} = " Yes "\right.$ (2) ${d}_{key} = \left\{{\sum }_{vk ∈ {V}^{˜} k} minvs ∈ {V}^{˜} s \left‖{υ}^{˜}k-vs\right‖ 2 , if otherwise .\right.$ (3) In the equations (2) and (3), Aₖ specifies if the interaction described in the text prompt 502B requires contact with a specific area on the object 316. If the answer to Assessing Specific Area Contact Need, Aₖ, is "No," then the body may not need to be in contact with the specific area, and the distance between Ṽₖ and the entire scene (for example, the 3D environment 502A in FIG. 5A) may be calculated. For example, the text prompt 502B may be prepared to include a natural language instruction as: "sitting on the saddle of a cow". Then, in this case, the person 314 may sit on a specific location of the cow, specifically the cow's back, not the head or neck. Therefore, the answer to Assessing Specific Location Contact Need, Aₖ is "Yes". Further, in the above equations, υ̃k denotes location of a vertex in Ṽk, and Ṽk denotes vertices of the selected body part.

For auxiliary body part selection, the sequence of prompts may further include a fourth prompt prepared to include the fourth base instruction comprising the text prompt 502B at the placeholder location in the fourth base instruction. In one instance, the processor 202 may be configured to prepare the fourth prompt to include the fourth base instruction. For example, the fourth prompt may be prepared to include the fourth base instruction 504C as: "In given image, which body part of person different from key body part 404A, i.e., cow's back, is in contact with the object? Please select just one body part from the following options: <list of body parts>". The list is displayed as < 'rightHand', 'rightUpLeg', 'leftArm', 'head', 'leftLeg', 'leftFoot', 'rightFoot', 'rightArm', 'rightLeg', 'leftForeArm', 'rightForeArm', 'neck', 'leftUpLeg', 'leftHand', 'hips'>.

At 516, the processor 202 may be further configured to apply the neural language model 122 to the fourth prompt to output a fourth response 516A. The fourth response 516A may specify at least one body part from the list of body parts that is different from the key body part 404A and must contact the object 316 in the interaction image 312 to achieve the interaction between the object 316 and the person 314. The set of body parts 404A-404B may include the auxiliary body part 404B identified based on the fourth response 516A. The set of locations 412A-412B may include the auxiliary contact location 412B where the auxiliary body part 404B contacts a 3D asset 502C representing the object 316 in the 3D environment 502A. The auxiliary contact location 412B may be different from the key contact location 412A. For example, the fourth response 516A may specify the auxiliary body part 404B of the person 314 as "Legs". In case no auxiliary body part is specified, the control may pass to 518.

In one instance, specifying a single pair of body and scene parts may often not suffice to define natural interactions. For example, relying solely on the distance between the hip (Key Body Part) and a cow's back when sitting on a cow's saddle may result in unrealistic interactions due to the hip's large segmentation area. To address this, the auxiliary body part 404B or more than one auxiliary body part may be selected that should contact the 3D asset 502C of the scene (for example, the 3D environment 502A in FIG. 5A), thereby ensuring more natural positions and orientations by regulating the distances between relevant auxiliary body parts and the 3D asset 502C of the 3D environment 502A.

The vertices of the auxiliary body part 404B may be denoted by Ṽₐ = (Ṽₐ⁰ ...,Ṽₐ^{m}), where Ṽₐ^{m} may represent vertices of mth selected parts. The distance loss function d_{auxiliary} may be calculated using mathematical equation (4), which is as follows: ${d}_{auxiliary} = \left\{1/\left|{V}^{˜}a\right|{\sum }_{{V}^{˜} am ∈ {V}^{˜} a} {\sum }_{{υ}^{˜} a ∈ {V}^{˜} ma} min vs ∈ Vs \left‖{υ}^{˜}a-vs\right‖ 2\right.$ (4) where υ̃ₐ may denote the location of the vertex in Ṽₐ^{m}.

For ground contact body parts selection, the sequence of prompts may include a fifth prompt prepared to include a fifth base instruction associated with the interaction image 312 and the text prompt 502B. For example, the fifth prompt may be prepared to include the fifth base instruction as: "Given the person in the input image, do you think any of this person's body parts are touching the floor? Please just answer Yes/No." and "When the person in the given image, which body parts should be contacting with the floor? Please select just one body part from the following options: <list of body parts>" The list is displayed as < 'rightHand', 'rightUpLeg', 'leftArm', 'head', 'leftLeg', 'leftFoot', 'rightFoot', 'rightArm', 'rightLeg', 'leftForeArm', 'rightForeArm', 'neck', 'leftUpLeg', 'leftHand', 'hips'>.

At 518, the processor 202 may be further configured to apply the neural language model 122 to the fifth prompt to output a fifth response. The fifth response may specify whether any body part from the list of body parts contacts the ground surface in the interaction image 312 to achieve the interaction between the object 316 and the person 314. In case of the interaction image 312, no body part contacts the ground surface in the interaction image 312. Therefore, the fifth response is No. However, in certain embodiments (not illustrated), the interaction may require a contact with the ground surface. In such embodiments, the set of body parts 404A-404B may include a ground contact body part identified based on the fifth response. Also, the set of locations 412A-412B may include a ground contact location where the ground contact body part contacts a ground mesh 414 representing the ground surface in the 3D environment 502A to achieve the interaction. For example, the ground contact body part in the fifth response may be "Legs" in case the person 314 is standing on the ground surface in the interaction image 312. In these or other embodiments, one or more ground contact body parts may be identified. Such parts must contact the ground to avoid unrealistic scenarios such as floating models. This may also ensure that the 3D parametric model (e.g., 3D mesh 402B) representing the person 314 in the interaction image 114 maintains physical plausibility within the scene.

The vertices of the ground contact body part may be denoted as: Ṽ_{g} = (Ṽ_{g}⁰...,Ṽ_{g}^{m}), where Ṽ_{g}^{m} may represent vertices of mth selected parts. The distance loss function d_{ground} between the selected body parts and the ground within the scene may be calculated using mathematical equation (5), which is as follows: ${d}_{ground} = \left\{1/\left|{V}^{˜}g\right|{\sum }_{{V}^{˜} gm ∈ {V}^{˜} g} {\sum }_{{υ}^{˜} g ∈ {V}^{˜} mg} min vg ∈ Vg \left‖{υ}^{˜}g-vg\right‖ 2\right. ,$ (5) if A_{g} = "Yes" where V_{g} may denote the vertices of the ground within the scene and υ̃_{g} denotes a vertex in Ṽ_{g}^{m}**.**

After 516, the control may pass to 408 of FIG. 4. Based on the calculation of d_{key}, d_{auxiliary}, and d_{ground}, the composite Distance Loss (L_{dis}) may be defined as L_{dis} = α_{key} · d_{key} + α_{auxiliary} · d_{auxiliary} + α_{ground} · d_{ground} where α_{key}, α_{auxiliary}, and α_{ground} represent the weights assigned to each respective distance. Additionally, the Penetration Loss may be defined as, Lₚₑₙ = v^∈V^ min(Ψ(^v), 0), to prevent unrealistic interpenetration of the 3D mesh 402B of the person 314 with the 3D environment 502A, where Ψ(^v) denotes the signed distance of body vertex v^ to the 3D environment 502A. When Ψ(^v) has a negative sign, it may indicate that the body vertex v^ is located inside the nearest scene object, signifying penetration. For computational efficiency, a precomputed grid may be used for each scene. Finally, the Pose Regularization Loss, denoted by L_{reg} = ∥θ - θinit∥2, may be used to penalize the pose parameter deviating from their initialization. The optimization objective may be defined by an equation (6), which is as follows:$E \left(t, R, θ\right) = Ldis + {w}_{reg} {L}_{reg} + {w}_{pen} {L}_{pen}$ (6)
(6), where the weights w_{reg} and wₚₑₙ balance the contributions of regularization and penetration losses, respectively.

The initial differential parameters represented by "R", "t", and "θ", as represented in the equation (6), may be adjusted through iterative optimization technique to minimize the customized loss function. This process may be repeated N times, and the final different parameters are obtained as final output, to ensure generation of realistic and diverse human-scene interactions. In an instance, values of the initial differential parameters such as "R", "t", and "θ" may be updated iteratively to minimize value of the loss function, until the values of the loss function match with threshold value and obtain the final differential parameters.

The disclosed approach may offer several advantages. Realistic 3D-human object interactions (both frequent and infrequent interactions) generation based on effective selection of one or more body parts that must contact the set of locations 412A-412B in the 3D environment, may be achieved by leveraging image analysis capabilities of vision language models (VLMs) and knowledge capabilities of large language models (LLMs), without requiring dependence on ground truth data and supervision. Due to very less or no dependence on the ground truth data, customized loss functions based on specific conditions may be optimized, thereby leading to generation of a diverse range of accurate static human-object interactions across different scenarios. Based on the utilization of the VLMs and the LLMs, the common and even uncommon human-object interactions may be generated in a zero-shot manner. Further, the proposed technique may involve leveraging of the customized loss functions for each human-object interaction using the VLMs and the LLMs, to generate specific conditions for each human-object interaction and refine the generated human-object interaction in terms of posture, location, and orientation. For refinement of the generated human-object interaction in terms of the posture, the location, and the orientation, a single dataset may be constructed based on dataset of generative artificial intelligence (AI) models. This dataset may include both the common interactions as defined in the generative AI models as well as the uncommon interactions not defined in the generative AI models. Due to this effective evaluation of the diverse range of static human-object interactions by leveraging a single dataset may be achieved. Thus, the present disclosure provides a framework which may leverage the principle of the VLMs and the LLMs, to synthesize the accurate and realistic human-object interactions with natural postures that accurately reflect prompts in challenge.ng situations. This approach may be optimized for efficiently generating diverse range of human postures based on the effective selection of different body parts of the human without requiring need of training data, to generate the uncommon interactions such as, for example, stamping a trash bag, hand standing on saddle of a standing cow, kicking a chair, hand standing on the chair. Additionally, this approach may be used across diverse applications such as augmented reality (AR), virtual reality (VR), digital twin technologies, computer games, and data augmentation applications.

It should be noted that the exemplary scenario 500 of FIGs. 5A, 5B, 5C, 5D, and 5E respectively is for exemplary purpose and should not be construed to limit the scope of the disclosure.

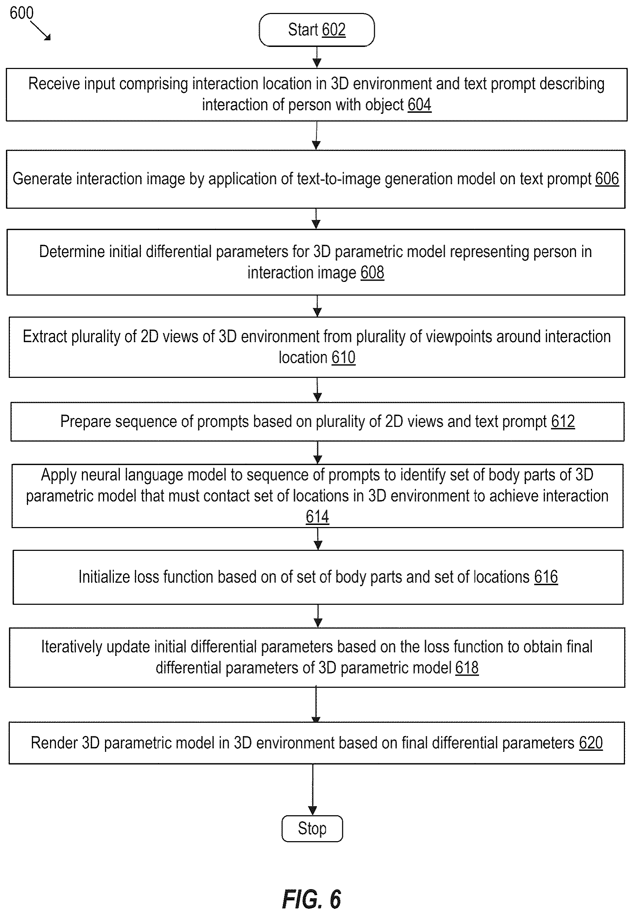

FIG. 6 is a diagram that illustrates a flowchart of an exemplary method for 3D human-object interaction generation using neural language models, in accordance with an embodiment of the disclosure. FIG. 6 is described in conjunction with elements from FIG. 1, FIG. 2, FIG. 3, FIG. 4, and FIGs. 5A-5E. With reference to FIG. 6, there is shown an exemplary flowchart 600 of a method for 3D human-object interaction generation using neural language models. The flowchart 600 may include operations from 602 to 620, which may be executed by the processor 202 (of FIG. 2) of the system 102 (of FIG. 1). The flowchart 600 may start at 602 and proceed to 604.

At 604, an input comprising an interaction location in a 3D environment and a text prompt may be received. The processor 202 may be configured to receive the input 104 comprising the interaction location 402C in the 3D environment 502A and the text prompt 112. The text prompt 112 may describe the interaction of the person 110 with the object 108. The reception is described further, for example, in FIG. 5A.

At 606, an interaction image may be generated by application of a text-to-image generation model on the text prompt. The processor 202 may be configured to generate the interaction image 114 by application of the text-to-image generation model 116 on the text prompt 112. The application of the text-to-image generation model 116 on the text prompt 112 is described further, for example, in FIG. 3 and FIG. 5A.

At 608, initial differential parameters for a 3D parametric model may be determined. The processor 202 may be configured to determine the initial differential parameters for the 3D parametric model 118. The 3D parametric model may represent the person 110 in the interaction image 114. The determination of the initial differential parameters for the 3D parametric model is described further, for example, in FIG. 3 and FIG. 4.

At 610, a plurality of 2D views of the 3D environment may be extracted from a plurality of viewpoints around the interaction location 402C. The processor 202 may be configured to extract the plurality of 2D views of the 3D environment 502A from the plurality of viewpoints around the interaction location 402C. The extraction of the plurality of 2D views of the 3D environment from the plurality of viewpoints is described further, for example, in FIG. 5A and FIG. 5B.

At 612, a sequence of prompts may be prepared based on the plurality of 2D views and the text prompt. The processor 202 may be configured to prepare the sequence of prompts 120, based on the plurality of 2D views and the text prompt 112. The preparation of the sequence of prompts based on the plurality of 2D views and the text prompt is described further, for example, in FIG. 5B, FIG. 5D, and FIG. 5E.

At 614, a neural language model (NLM) may be applied on the sequence of prompts to identify a set of body parts. The processor 202 may be configured to apply the NLM on the sequence of prompts 120 to identify the set of body parts of the 3D parametric model 118 that must contact the set of locations in the 3D environment 502A to achieve the interaction. The identified set of body parts may correspond to at least one of a key body part, an auxiliary body part, or a ground contact body part of the 3D parametric model 118 representing the person 110min the interaction image 114. The application of the NLM to the sequence of prompts to identify the set of body parts of the 3D parametric model is described further, for example, in FIG. 5A and FIGs. 5C-5E.

At 616, a loss function may be initialized based on the set of body parts and the set of locations. The processor 202 may be configured to initialize the loss function based on the set of body parts and the set of locations. The loss function may include, but not limited to, the composite distance between the vertices of the set of body parts and the vertices of the set of locations, the penetration loss specifying the signed distance between the body vertex of the 3D parametric model 118 and the scene vertex of the 3D environment 502A, and the regularization loss measuring the deviation in the pose parameter of the 3D parametric model 118 with respect to the initialized pose parameter of the initial differential parameters. The initialization of the loss function based on the set of body parts and the set of locations is described further, for example, in FIG. 3 and FIG. 4.

At 618, the initial differential parameters may be iteratively updated based on the loss function to obtain final differential parameters of the 3D parametric model. The processor 202 may be configured to iteratively update the initial differential parameters based on the loss function to obtain the final differential parameters of the 3D parametric model 118. The initial differential parameters may be updated iteratively to minimize the value of the loss function until the value of the loss function satisfies the convergence condition. The iterative update of the initial differential parameters to obtain the final differential parameters is described further, for example, in FIG. 1, FIG. 5D, and FIG. 5E.

At 620, the 3D parametric model may be rendered in the 3D environment based on the final differential parameters. The processor 202 may be configured to render the 3D parametric model 118 in the 3D environment 502A based on the final differential parameters. The rendering of the 3D parametric model in the 3D environment based on the final differential parameters is described further, for example, in FIG. 1, FIG. 4, FIG. 5D, and FIG. 5E. Control may pass to end.

Although the flowchart 600 is illustrated as discrete operations, such as 604, 606, 608, 610, 612, 614, 616, 618, and 620, the disclosure is not so limited. However, in certain embodiments, such discrete operations may be further divided into additional operations, combined into fewer operations, or eliminated, depending on the particular implementation without detracting from the essence of the disclosed embodiments.

Various embodiments of the disclosure may provide one or more non-transitory computer-readable storage medium configured to store instructions that, in response to being executed, cause a system (such as the system 102) to perform a set of operations. The set of operations may include receiving an input comprising an interaction location in a 3D environment and a text prompt describing an interaction of a person with an object. The set of operations may further include generating an interaction image by application of a text-to-image generation model on the text prompt. The set of operations may further include determining initial differential parameters for a 3D parametric model representing the person in the interaction image. The set of operations may further include extracting a plurality of 2D views of the 3D environment from a plurality of viewpoints around the interaction location. The set of operations may further include preparing a sequence of prompts based on the plurality of 2D views and the text prompt. The set of operations may further include applying a neural language model to the sequence of prompts to identify a set of body parts of the 3D parametric model that must contact a set of locations in the 3D environment to achieve the interaction. The set of operations may further include initializing a loss function based on the set of body parts and the set of locations. The set of operations may further include iteratively updating the initial differential parameters based on the loss function to obtain final differential parameters of the 3D parametric model. The set of operations may further include rendering the 3D parametric model in the 3D environment based on the final differential parameters.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, one of ordinary skill in the art will recognize that such recitations should be interpreted to mean at least the recited number (e.g., the bare recitation of "two recitations," without other modifiers, means at least two recitations, or two or more recitations). Furthermore, in those instances where a convention analogous to "at least one of A, B, C, D, and E, etc." or "one or more of A, B, C, D, and E, etc." is used, in general such a construction is intended to include A alone, B alone, C alone, D alone, E alone, A and B together, A and C together, B and C together, A and D together, B and D together, C and D together, A and E together, B and E together, C and E together, D and E together, or A, B, C, D, and E together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, executable by a processor, comprising:
receiving an input comprising an interaction location in a 3D environment and a text prompt describing an interaction of a person with an object;
generating an interaction image by application of a text-to-image generation model on the text prompt;
determining initial differential parameters for a 3D parametric model representing the person in the interaction image;
extracting a plurality of 2D views of the 3D environment from a plurality of viewpoints around the interaction location;
preparing a sequence of prompts based on the plurality of 2D views and the text prompt;
applying a neural language model to the sequence of prompts to identify a set of body parts of the 3D parametric model that must contact a set of locations in the 3D environment to achieve the interaction;
initializing a loss function based on the set of body parts and the set of locations;
iteratively updating the initial differential parameters based on the loss function to obtain final differential parameters of the 3D parametric model; and
rendering the 3D parametric model in the 3D environment based on the final differential parameters.

2. The method according to claim 1, further comprising identifying a key scene area from the 3D environment by selecting k-nearest neighbor vertices from a scene mesh of the 3D environment,
wherein the k-nearest neighbor vertices are selected based on the interaction location, and
the plurality of 2D views of the 3D environment is extracted to include the key scene area from the plurality of viewpoints.

3. The method according to claim 1, wherein the sequence of prompts comprises a first prompt that is prepared to include a first base instruction with the text prompt describing the interaction, and
the neural language model is applied to the first prompt to output a first response specifying whether the interaction described in the text prompt requires a contact between the object and the person.

4. The method according to claim 3, wherein the sequence of prompts further comprises a second prompt that is prepared to include the plurality of 2D views, and a second base instruction associated with the plurality of 2D views, and
the neural language model is applied to the second prompt based on the first response to output a second response specifying a name of a key scene area depicted in the plurality of 2D views.

5. The method according to claim 4, wherein the sequence of prompts further comprises a third prompt that is prepared to include a third base instruction and the second response specifying the name of the key scene area at a placeholder location in the third base instruction, and
the neural language model is applied to the third prompt to output a third response identifying from the set of body parts, a key body part that must contact a key contact location of the set of locations in the key scene area of the 3D environment to achieve the interaction described in the text prompt.

6. The method according to claim 5, wherein the key contact location in the key scene area of the 3D environment corresponds to a body part of a 3D asset representing the object in the 3D environment.

7. The method according to claim 5, wherein the key contact location is same as or includes the interaction location.

8. The method according to claim 5, wherein the sequence of prompts further comprises a fourth prompt that is prepared to include:
the interaction image,
a fourth base instruction comprising the text prompt at a placeholder location in the fourth base instruction, and
a list of body parts of the person, and
wherein the neural language model is applied to the fourth prompt to output a fourth response specifying at least one body part from the list of body parts that is different from the key body part and must contact the object in the interaction image to achieve the interaction.

9. The method according to claim 8, wherein the set of body parts includes an auxiliary body part that is identified based on the fourth response,
the set of locations includes an auxiliary contact location where the auxiliary body part contacts a 3D asset representing the object in the 3D environment, and
the auxiliary contact location is different from the key contact location.

10. The method according to claim 1, wherein the sequence of prompts further comprises a fifth prompt that is prepared to include:
the interaction image,
the text prompt,
a fifth base instruction associated with the interaction image and the text prompt,
a list of body parts of the person, and
wherein the neural language model is applied to the fifth prompt to output a fifth response specifying a body part from the list of body parts that must contact a ground surface in the interaction image to achieve the interaction.

11. The method according to claim 10, wherein the set of body parts includes a ground contact body part that is identified based on the fifth response, and
the set of locations includes a ground contact location where the ground contact body part must contact a ground mesh representing the ground surface in the 3D environment to achieve the interaction.

12. The method according to claim 1, wherein the loss function includes:
a composite distance loss between vertices of the set of body parts and vertices of the set of locations,
a penetration loss specifying a signed distance between a body vertex of the 3D parametric model and a scene vertex of the 3D environment, and
a regularization loss measuring a deviation in a pose parameter of the 3D parametric model with respect to an initialized pose parameter of the initial differential parameters.

13. The method according to claim 1, wherein the initial differential parameters are updated iteratively to minimize a value of the loss function until the value of the loss function satisfies a convergence condition.

14. One or more non-transitory computer-readable storage medium configured to store instructions that, in response to being executed, causes a system to perform operations, the operations comprising:
receiving an input comprising an interaction location in a 3D environment and a text prompt describing an interaction of a person with an object;
generating an interaction image by application of a text-to-image generation model on the text prompt;
determining initial differential parameters for a 3D parametric model representing the person in the interaction image;
extracting a plurality of 2D views of the 3D environment from a plurality of viewpoints around the interaction location;
preparing a sequence of prompts based on the plurality of 2D views and the text prompt;
applying a neural language model to the sequence of prompts to identify a set of body parts of the 3D parametric model that must contact a set of locations in the 3D environment to achieve the interaction;
initializing a loss function based on the set of body parts and the set of locations;
iteratively updating the initial differential parameters based on the loss function to obtain final differential parameters of the 3D parametric model; and
rendering the 3D parametric model in the 3D environment based on the final differential parameters.

15. The one or more non-transitory computer-readable storage medium according to claim 14, further comprising identifying a key scene area from the 3D environment by selecting k-nearest neighbor vertices from a scene mesh of the 3D environment,
wherein the k-nearest neighbor vertices are selected based on the interaction location, and
the plurality of 2D views of the 3D environment is extracted to include the key scene area from the plurality of viewpoints.

16. The one or more non-transitory computer-readable storage medium according to claim 14, wherein the sequence of prompts comprises a first prompt that is prepared to include a first base instruction with the text prompt describing the interaction, and
the neural language model is applied to the first prompt to output a first response specifying whether the interaction described in the text prompt requires a contact between the object and the person.

17. The one or more non-transitory computer-readable storage medium according to claim 16, wherein the sequence of prompts further comprises a second prompt that is prepared to include the plurality of 2D views, and a second base instruction associated with the plurality of 2D views, and
the neural language model is applied to the second prompt based on the first response to output a second response specifying a name of a key scene area depicted in the plurality of 2D views.

18. The one or more non-transitory computer-readable storage medium according to claim 17, wherein the sequence of prompts further comprises a third prompt that is prepared to include a third base instruction and the second response specifying the name of the key scene area at a placeholder location in the third base instruction, and
the neural language model is applied to the third prompt to output a third response identifying from the set of body parts, a key body part that must contact a key contact location of the set of locations in the key scene area of the 3D environment to achieve the interaction described in the text prompt.

19. The one or more non-transitory computer-readable storage medium according to claim 14, wherein the loss function includes:
a composite distance loss between vertices of the set of body parts and vertices of the set of locations,
a penetration loss specifying a signed distance between a body vertex of the 3D parametric model and a scene vertex of the 3D environment, and
a regularization loss measuring a deviation in a pose parameter of the 3D parametric model with respect to an initialized pose parameter of the initial differential parameters.

20. A system, comprising:
a memory storing instructions; and
a processor, coupled to the memory, which executes the instructions to perform a process comprising:
receiving an input comprising an interaction location in a 3D environment and a text prompt describing an interaction of a person with an object;
generating an interaction image by application of a text-to-image generation model on the text prompt;
determining initial differential parameters for a 3D parametric model representing the person in the interaction image;
extracting a plurality of 2D views of the 3D environment from a plurality of viewpoints around the interaction location;
preparing a sequence of prompts based on the plurality of 2D views and the text prompt;
applying a neural language model to the sequence of prompts to identify a set of body parts of the 3D parametric model that must contact a set of locations in the 3D environment to achieve the interaction;
initializing a loss function based on the set of body parts and the set of locations;
iteratively updating the initial differential parameters based on the loss function to obtain final differential parameters of the 3D parametric model; and
rendering the 3D parametric model in the 3D environment based on the final differential parameters.
